# EUROPEAN PATENT SPECIFICATION

(11) **EP 1 511 404 B1**
(45) Date of publication and mention of the grant of the patent: **05.11.2008**
(21) Application number: 02713998.9
(22) Date of filing: 09.04.2002
(51) Int. Cl.: A44B 1/02, A44B 1/18, A41H 37/00

(54) **A BUTTON PARTLY MADE OF A MATERIAL having a frozen tension**
EIN KNOPF, TEILWEISE HERGESTELLT AUS EINEM MATERIAL, WELCHES eine eingefrorene Spannung aufweist
BOUTON EN PARTIE A BASE D'UN MATERIAU avec une tension congelée

(43) Date of publication of application: 09.03.2005
(73) Proprietor: Zeman, Jaromir, 683 33 Nesovice (CZ)
(72) Inventor: Zeman, Jaromir, 683 33 Nesovice (CZ)
(74) Representative: Kendereski, Dusan
(86) International application number: PCT/CZ2002/000021
(87) International publication number: WO 2003/092426

(56) References cited:
- US-A- 3 247 559
- US-A- 3 871 089
- US-A- 4 312 077
- US-A- 5 138 779
- PATENT ABSTRACTS OF JAPAN vol. 014, no. 299 (C-0733), 27 June 1990 (1990-06-27) & JP 02 098301 A (ISAO SAKAI), 10 April 1990 (1990-04-10)
- HORST KUCHLING: "Taschenbuch der Physik" 1989 , VERLAG HARRI DEUTSCH , THUN UND FRANKFURT/MAIN XP002213060 page 186 -page 189 page 592 -page 593

## Description

### Technical Field

The invention relates to a button intended to be fastened to a woven or non-woven material using an element having a frozen tension.

### Background Art

Buttons of the prior art represented usually by small discs sewed with sewing threads through their two or four holes to one part of clothing and, after the button is passed through a buttonhole made in the second part of clothing, enabling their mutual, removable joint has been used for many generations. Fastening with other catching element, e.g. an eye arranged at the bottom part of the button has been also known. In US patent No, 4,313,077 the method of fastening buttons to textile material, and a device for performing of said method is described. In addition, the fasteners with invertible bases are mentioned in US patent No. 3,247,559. The fasteners of this invention constitute new innovations in fastener structures and in techniques of securing a fastener to a porous, projection-penetrable member, such as a fabric with projection-penetrable interstices. The buttons of the appearance described above can be then fastened - sewed with the thread. The disadvantage consists particularly in the fact that the procedure mentioned is time-consuming both during manufacturing of clothes and their repairs. Another disadvantage of the buttons fastened as mentioned above is the fact that the mechanical properties of the thread (sometimes also the button) show gradual degradation resulting in the button loss. Metal buttons being fastened to textiles or other materials by riveting or in a similar way, as given for example in the Patent Application FR 2 755 351, has been also generally known. They are used particularly for work clothing and denim clothes. This fastening method is more reliable.

The present invention is aimed at creation of a button that would be able to simplify the procedure necessary for its fastening to a material and possibly to reduce or minimize possible injury of an operator sewing the button and simultaneously to ensure maximum reliability of the join made between the button and its background material or, if possible, the fastening element, e.g. a basement fitted with an orifice for a fastening element. Reliability of this method used for button fastening should be comparable to riveting.

### Disclosure of the Invention

The disadvantages mentioned above have been eliminated with a button fitted with an element through which it is fastened to a woven or non-woven material according to the invention characterized in that at least a fastening part of a button body is manufactured from a material having elastic memory or features only with the frozen tension effect. The fastening element having the straight or elongate shape and fixed under the temperature Tg is then passed through a woven or non-woven material or a part of clothing while a "frozen" tension being released by a thermal, mechanical or ultrasonic shock makes the fastening element to return to its original condition, i.e. to return to the stable (permanent) shape of so-called stable position and to join firmly with the textiles. The material having the frozen tension suitable at least for the fastening part can be a metal alloy having the frozen tension an elastic or polymer material having the frozen tension. A deformable solid substance which metastable condition is fixed by a thermoplastics when, after said thermoplastic is heated, the deformable part of the button returns to the stable condition due to its elasticity and the relevant part of the button reaches the shape ensuring the demanded stable fixation of the button as the whole can be also considered.

Alloys having the elastic memory are for example copper-nickel and copper-aluminium alloys, gold-cadmium or nickel-titan alloys, the latter being known under the trade name Nitinol. The alloy deformed plastically into its low-temperature martensitic phase returns to its original condition after being heated and transited into the austenitic phase. (Gandhi, M.V. and Thompson, B.S., "Smart Materials and Structures", Chapman & Hall, 1993, pp. 192-215.)

Typical thermoplastic polymers having a linear structure usually do not feature with significant elastic memory. On the contrary, they are characterized with so-called "cold flow". It is the event during which segments of a polymer submitted to tension are transited so that tension disappears gradually even under the normal temperature. The cold flow appearing in the polymer and causing the loss of the elastic memory can be inhibited through macromolecules cross-linking, formation of crosslinks between the adjacent segments of the polymer, or through incorporation of voluminous lateral substituents into a strand, through enhancing of polymer crystallinity and increasing of molecular weight that shows the similar effect. Cooling of the deformed material below the glass transition point Tg prevents transition of macromolecule segments that returns back to the stable condition after being heated above Tg temperature. Rubber vulcanisation seems to be the most known and oldest cross-linking method. Bridges between adjacent elastomer macromolecules are formed in it by sulfur. As it is generally known, the vulcanised rubber (rubber) undergoes deformation under tension and returns to its original shape after tension is released. Temperature of the glass transition Tg under which rubber keeps its deformed, metastable shape, is well below -50 °C. Since rubber vulcanisation was invented, many new polymers featuring with the elastic memory have been invented. In contrast with metals, polymers feature with significantly higher reversible deformability. They have mostly the cross-linked structure. Particularly polymers and copolymers based on norbornene (e.g. JP-A-59-53528), copolymers of conjugated dienes, polymers and copolymers of alkenes, e.g. ethylene, propylene, butene, 4-methylpentene, hexene or octene, some epoxy resins, polymers based on aromatic vinyl monomers, unsaturated nitrile polymers, polymers based on esters of acrylic acid (JP-A.60-28433), polymers based on cross-linkable polycaprolactam (JP-A-59-11315) or cross-linked diene polymer, amorphous fluorinated polymers as, for example, vinyl fluoride copolymers, vinyl fluoralkene/olefin copolymers, fluoroacyl vinyl ethers, fluorosilicone elastomers and fluorophosphazenone elastomers can be given as examples. In said cases, the relevant polymer part is made by injection moulding, pressing or casting in the demanded shape being then fixed by cooling and/or cross-linking. Cross-linking is performed by irradiation or organic peroxides are used for it.

Elasticity of a deformable solid substance, e.g., polymeric cross-linked elastomer, metal, etc. combined with a thermoplastic can be also made use of. The important is that the softening point of a thermoplastic shall be lower than that one at which the solid substance looses its elastic properties, i.e. that the elastic properties of the elastically deformed solid substance shall be kept at the temperatures up to the softening temperature point.

As far as metal alloys or polymers having the frozen tension that are to be used as a fastening element of the button are concerned, their transition temperature at which the transition to the stable shape occurs shall range at the interval of technologically acceptable temperatures, i.e. between 30 °C and 200 °C.

### Brief Description of the Drawings

The invention is disclosed using the following drawings where
Fig. 1 through Fig. 5 represent the schematic design of a button structure made of a combination of various materials;
Fig. 6a represents the preferred embodiment of the button fitted with a pair of fastening elements intended for fastening into a support element;
Fig. 6b represents the preferred embodiment of the button fitted with a pair of fastening elements intended for fastening without the support element;
Fig. 7a and 7b represent another advantageous version of the button structure before and after its fastening to textiles; and
Fig. 8a and 8b represent the button embodiment fitted with a deforming element located inside the fastening element.

### Description of the Preferred Embodiment

The principle of the button structure will be described below using the single preferred embodiments while said embodiments do not reduce in any way the further, more detailed, preferred embodiments given below. Any targeted change in the shape and/or volume of the fastening element caused by the temperature change will be called for simplicity the " frozen tension effect" in the description below.

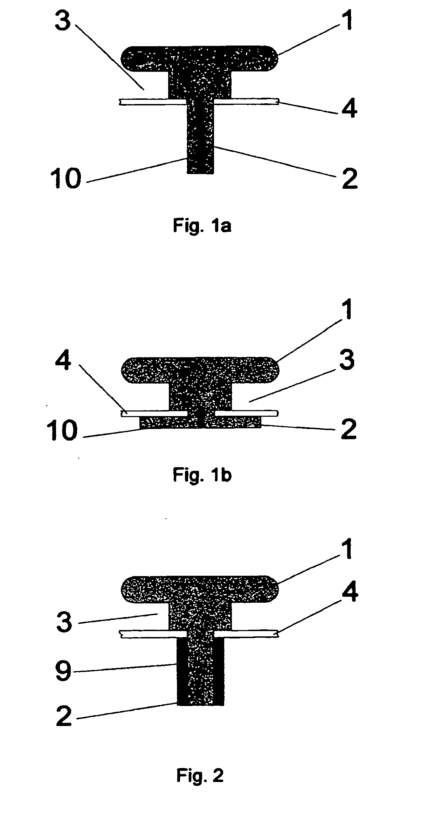

A button shown in Fig. 1a and Fig. 1b consists of a body **1** with a fit **3,** fitted with a fastening element **2** being e.g. in a shape of a shank that is divided with a longitudinal gap **10** at the direction of its axis. The part of the fastening element **2** is made of a material having a frozen tension or featuring with a frozen tension effect. Polynorbornene or fluorosilicone elastomer, etc. can be used for example as the suitable materials. The button is fastened to textiles **4** so that the fastening element **2** is heated to the required transition temperature point. When said temperature is reached, the fastening element **2** begins its transition. The material with a frozen tension is then cooled below the transition temperature point. This causes the permanent fixation of the shape of the fastening element **2** and its fastening to the textiles **4.** The condition mentioned is shown in Fig. 1b.

Another preferred embodiment of the button is shown in Fig. 2. The button as specified consists of the body **1** with the fit **3** and the fastening element **2** made of the material without a frozen tension while at least a jacket **9** of the fastening element **2** is made of the material with a frozen tension, e.g. polynorbornene. The body **1** of the button with the fastening element **2** is fastened to the textiles using the known method, i.e. the fastening element **2** having the shape of the shaft penetrates through the textiles **4** and then is heated above the transition temperature point. This enables the material with elastic memory to change the shape of the fastening element **2,** changes its shape and fastens the button to the textiles **4.**

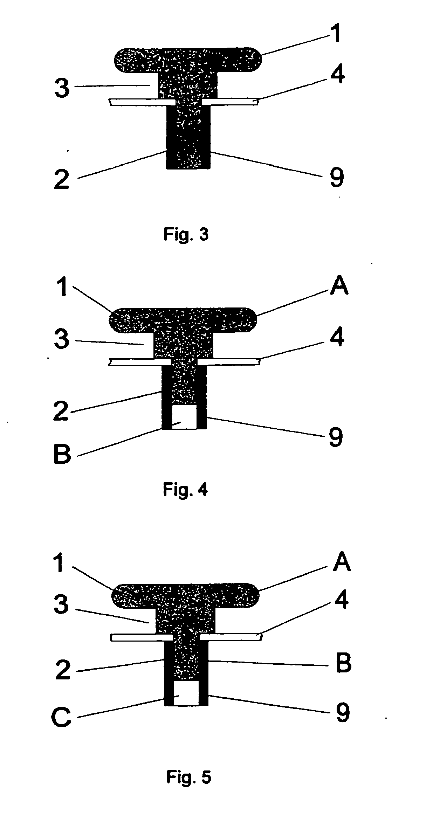

The button as shown in Fig. 3 consists of the body **1** with the fit **3** and the fastening element **2** made of the material with a frozen tension, e.g. polynorbornene while at least one part of the fastening element **2** is fitted with the jacket **9** made of the material without a frozen tension. The body **1** with the fit **3** and the fastening element **2** is fastened to the textiles **4** using the known method, i.e. the fastening element **2** having the shape of the shaft penetrates through the textiles **4** and then is heated above the transition temperature point. This enables the material with elastic memory to change the shape of the fastening element **2** and ensures fastening of the button to the textiles **4.**

The button as shown in Fig. **4** consists of the body **1** with the fit **3** and the fastening element **2** made of materials A having elastic memory while the jacket **9** of the fastening element **2** is made of material B without a frozen tension. The body **1** of the button with the fastening element **2** is fastened to the cloth using the known method, i.e. the fastening element **2** having the shape of the shaft penetrates through the textiles **4** and then is heated above the transition temperature point. This enables the material with elastic memory to change the shape of the fastening element **2** and ensures fastening of the button to the textiles **4**. Material A is e.g. the cross-linked diene polymer and material B is the thermoplastic.

The button as shown in Fig. 5 consists of the body **1** with the fit **3** and the fastening element **2** made of the materials A having no a frozen tension representing its significant part while the jacket **9** of the fastening element **2** is made of the material B having no a frozen tension. At least one part of the fastening element **2** is made of the material C having elastic memory. The body **1** of the button with the fastening element **2** is fastened to the cloth using the known method, i.e. the fastening element **2** having the shape of the shaft penetrates through the cloth and then is heated above the transition temperature point. This enables the material with a frozen tension to change the shape of the fastening element **2** and ensures fastening of the button to the textiles **4**. The material A is elastically solid substance while the material B is the thermoplastic and the material C represents, e.g, the cross-linked crystalline diene polymer.

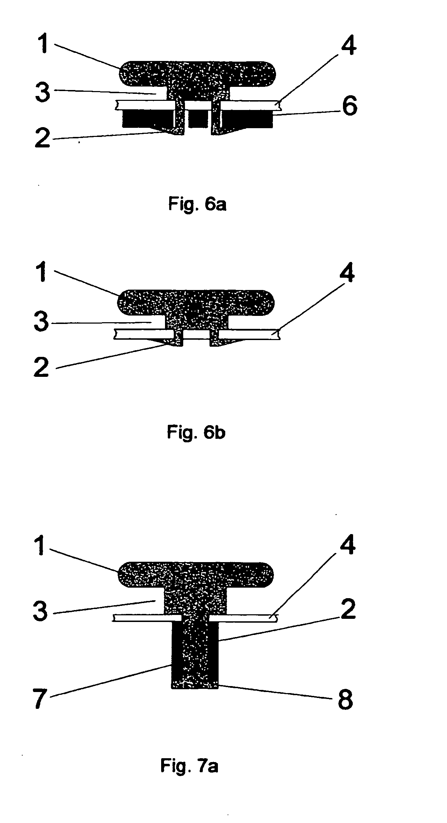

Other preferred embodiments of the button made of plastic intended for fastening to the woven or non-woven material are shown in Fig. 6b and 6b. The button in this embodiment consists of the body **1** with the fit **3** to which a pair of the fastening element **2** is fastened at certain gap-length, having the shape of e.g. small tubes or rods featuring with a frozen tension effect. The button in this embodiment consists also of a supporting element **6** having the shape of a basement fitted with two orifices **5** through which the fastening elements **2** pass. The button is fastened to the textiles **4** with the fastening elements **2** having the shape of the small tubes or rods fitted e.g. with tips on their ends, the textiles **4**, e.g. thin cloth, being stabbed through with them. The fastening elements **2** of the button are then heated at the desired transition temperature point. As the temperature is reached, the fastening element **2** begins to change its shape; after it is cooled below the transition temperature value, the shape of the fastening element **2** begins its fixation and the button is fastened to the textiles **4**.

The button intended for fastening to the thicker textiles is given in Fig. 6a. Both the embodiment and fastening is analogous to those ones described and shown in Fig. 6a with the exception that the supporting element **6** is not used for said embodiment.

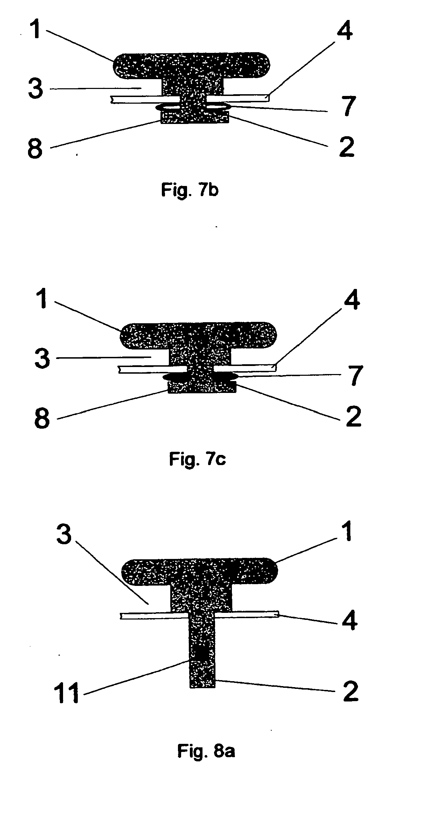

Other preferred embodiment of the button intended for fastening to the textiles is given in Fig. 7a and 7b. The button according to said embodiment consists of the body **1** with the fit **3** to which the fastening element **2** featuring with the elastic memory effect in its elongated condition is connected at the direction of its axis fitted with a termination **8** to which a roll-on **7** bearing the termination **8** is set on tightly. The roll-on **7** is made of the material without elastic memory. The condition before heating above the transition temperature value is shown in Fig. 7a. The condition when, after the button being passed through the orifice in the textiles **4** and the fastening element **2** heated above the transition temperature value, the fastening element **2** is shrunk to the desired length that causes the deformation of the roll-on **7** with which the button is fastened to the textiles **4** is shown in Fig. 7b.

The same effect can be also reached when the roll-on **7** is replaced by the outer layer made of thermoplastic, see Fig. 7c.

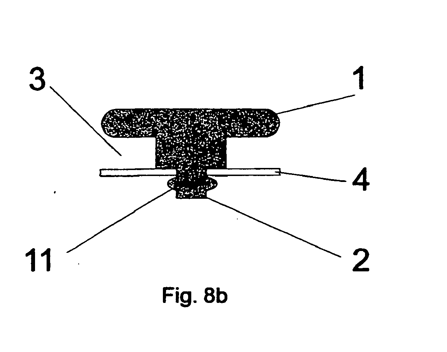

Other preferred embodiment of the button intended for fastening to the textiles is shown in Fig. 8a and Fig. 8b. The button according to this embodiment consists of the body **1** with the fit **3** and the fastening element **2** in which a deforming element **11** made of the material featuring with the elastic memory effect is located. The condition before heating above the transition temperature value is shown in Fig. 8a. The condition when the deforming element **11**, after being heated, releases gas, e.g. nitrogen that causes the change in the deforming element shape is shown in Fig. 8b. Said change then causes further deformation of the fastening element **2** that fastens the button to the textiles **4**.

The same effect can be also reached when the deforming element **11** is made of the material having a frozen tension.

### Industrial Applicability

The button intended for fastening using the a frozen tension of the material can be applied in the clothing industry for manufacturing of ready-made clothes and other products made of the woven and non-woven materials, for repairs of clothes in households or repair shops for clothes and other products.

## Claims

1. A button suitable to be fastened to a woven or non-woven material or a part of clothing comprising a body (1), wherein said body (1) being fitted with at least one fastening element (2) capable of being passed through the woven or non-woven material or the a part of clothing **characterized in that** said fastening element (2) is made at least partially from a material with a frozen tension in a metastable condition being releasable by thermal, mechanical or ultrasonic shock thereby returning the fastening element (2) to its stable shape.

2. The button according to Claim 1 wherein the fastening element (2) is at least partially made of Cu-Ni-Al and/or Au-CD alloy featuring with a frozen tension.

3. The button according to Claim 1 wherein the material having an effect of a frozen tension is polynorbornen, norbornen copolymers with conjugated dienes, polymers and copolymers of ethylene and/or propylene and/or butene and/or 4-methylpentene and/or hexene and/or octane, or polymers containing epoxy groups and aromatically substituted vinyl monomer or unsaturated nitrile and/or esters of acrylic acid or cross-linkable polyamide or cross-linked crystalline diene polymer or amorphous fluorinated polymers of the group of vinyl fluoride copolymers or fluoroalkene/olefin copolymers or fluoroacyl vinyl ethers or fluorosilicone elastomers or fluorophosphazenone elastomers.

4. The button according to the Claims 1 or 3, wherein the polymer having a frozen tension cross-linked due to ionising radiation and/or organic peroxides is used for both the body **(1)** and the fastening element **(2)**.

5. The button according to the Claim 1 wherein the fastening element is divided at least with one gap **(10)** at the direction of the axis of the fastening element **(2)** longitudinally up to its termination.

6. The button according to the Claim 1 wherein the fastening element **(2)** contains a deforming element **(11)** while the fastening element **(2)** is advantageously covered with the thermoplastic.

## Patentansprüche

1. Knopf geeignet zur Befestigung von gewebtem oder ungewebtem Material oder eines Bekleidungsteils der einen Korpus (1) umfasst, wo gesagte Korpus (1) mit mindestens einem Fixierelement (2) versehen ist, das durch gewebtes oder ungewebtes Material oder Bekleidungsteil durchgehen fähig ist **dadurch gekennzeichnet, das** Fixierelement (2) mindestens zum Teil aus Material mit Gestaltbeharrungsvermögen in metastabilen Bedingungen angefertigt ist, das mittels thermische, mechanische oder Ultraschallwelle lösbar ist, die das Fixierelement (2) in Urzustand zurücksetzt.

2. Knopf nach Anspruch 1, **dadurch gekennzeichnet, das** Fixierelement (2) mindestens zum Teil aus Cu-Ni-Al oder aber Au-Cd Gestaltbeharrungsvermögen aufweisende Legierung angefertigt ist.

3. Knopf nach Anspruch 1, **dadurch gekennzeichnet, das** Material mit Gestaltbeharrungsvermögen Polynorbornen, Norbornenkopolymere mit konjugierten Dienen, Polymere und Kopolymere von Ethylen oder aber Propylen oder aber Buten oder aber 4-Methylpenten oder aber Hexen oder aber Okten, oder Polymere die Epoxidgruppen und aromatisch substituierte Vinylmonomer oder ungesättigte Nitril oder aber Estere von Akrylsäure oder vernetzungsfähige Polyamid oder vernetzte kristallinische Dienpolymer oder amorphe Fluorpolymerisate aus Gruppe Vinylfluoridkopolymeren oder Fluoralken/Olefin - Koplymeren oder Fluorakylvinyletheren oder Fluorsilikon Elastomeren oder Fluorfosfazen Elastomeren, ist.

4. Knopf nach Anspruch 1 oder 3, **dadurch gekennzeichnet, das** für Korpus (1) und Fixierelement (2) verwendet man Polymer mit Gestaltbeharrungsvermögen, das durch Wirkung von lonisierunsstrahlung oder durch organische Peroxide vernetzt ist.

5. Knopf nach Anspruch 1, **dadurch gekennzeichnet, das** Fixierelement (2) in Achselängsrichtung des Fixierelementes (2) bis Endung mit mindestens einer Lücke geteilt ist.

6. Knopf nach Anspruch 1, **dadurch gekennzeichnet, das** Fixierelement (2) ein Deformationselement (11) beinhaltet, wobei Fixierelement (2) vorteilhaft mit Thermoplast umhüllt ist.

## Revendications

1. Un bouton destiné à être fixé sur un matériau tissé ou non-tissé ou sur une partie de vêtement, ce bouton comprenant un corps (1), qui est muni tout élement de fixation (2) capable s'étend à travers le matériau tissé ou non-tissé ou à travers la partie de vêtement textile, ce bouton étant **caractérisé en ce que** l'élement de fixation (2) est fabriqué au moins partiellement en matériau avec une tension congelée en état metastable, étant largable par un shock thermique, mécanique ou ultra-sonique, sic l'élement de fixation (2) remettre dans son façon stable.

2. Un bouton selon la revendication 1, **caractérisé en ce que** l'élement de fixation (2) est fabriqué au moins partiellement en alliage Cu-Ni-Al et/ou Au-CD avec caractéres d'une tension congelée.

3. Un bouton selon la revendication 1, **caractérisé en ce que** le matériau ayant l'effet d'une tension congelée est polynorbornene, norbornene copolyméres avec des diènes cojugués, polymères et copolyméres d'éthylène et/ou propylène et/ou butène et ou 4-methylpenténe et/ou hexène et/ou octane, ou polyméres comprenant des groupes époxy et monomère de vinyle substitué aromatiquement ou nitrile non-saturé et/ou estéres d' acide acrylique ou polyamides de liason transversale ou polymère de diène cristalin ou polyméres amorphes fluorés de la groupe de copolymères de fluorure de vinyle ou copolymères de fluoralcéne/oléfine ou éthers de vinyle ou élastomères fluorsilicié ou élastomères fluorphosphatzenone.

4. Un bouton selon la revendication 1 ou 3, **caractérisé en ce que** le polymère ayant une tension congelée de liason transversale sous l'action d' une radiation d'ionosation er/ou des peroxides organiques sont appliqués pour les deux, le corps (1) et l'élement de fixation (2).

5. Un bouton selon la revendication 1, **caractérisé en ce que** l'élement de fixation (2) est divisé au moins par une rainure (10) dans le sens d' axe d'élement de fixation (2) longitudinalement en 'haut à bout.

6. Un bouton selon la revendication 1, **caractérisé en ce que** l'élement de fixation (2) contient un membre de déformation (11), l'élement de fixation (2) soit préférablement couvert en matière thermoplastique.
